(19) Europäisches Patentamt / European Patent Office / Office européen des brevets

(11) **EP 2 269 015 B1**

(12) **FASCICULE DE BREVET EUROPEEN**

(45) Date de publication et mention
de la délivrance du brevet:
**31.05.2017 Bulletin 2017/22**

(21) Numéro de dépôt: **09733864.4**

(22) Date de dépôt: **14.04.2009**

(51) Int Cl.:
*G01J 5/06* (2006.01)       *F25B 9/00* (2006.01)
*F25D 29/00* (2006.01)       *F25D 19/00* (2006.01)

(86) Numéro de dépôt international:
**PCT/EP2009/054373**

(87) Numéro de publication internationale:
**WO 2009/130137 (29.10.2009 Gazette 2009/44)**

(54) **SYSTÈME OPTRONIQUE IR À MAINTENANCE PRÉDICTIVE À PARTIR D'UNE DÉRIVE BRUTALE**

OPTRONISCHES INFRAROTSYSTEM MIT VORBEUGENDER WARTUNG NACH EINER PLÖTZLICHEN DRIFT

OPTRONIC INFRARED SYSTEM WITH PREDICTIVE MAINTENANCE FOLLOWING A SUDDEN DRIFT

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.04.2008 FR 0802335**

(43) Date de publication de la demande:
**05.01.2011 Bulletin 2011/01**

(73) Titulaire: **THALES**
**92400 Courbevoie (FR)**

(72) Inventeur: **BIHANNIC, Didier**
**F-91520 Egly (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A- 0 747 644       WO-A-2007/017866**
**JP-A- 62 030 924       US-A- 5 734 593**

**Description**

Le domaine de l'invention est celui des systèmes optroniques tels que des caméras thermiques, équipés de détecteurs infrarouges (« IR ») refroidis aussi désignés détecteurs-refroidisseurs.

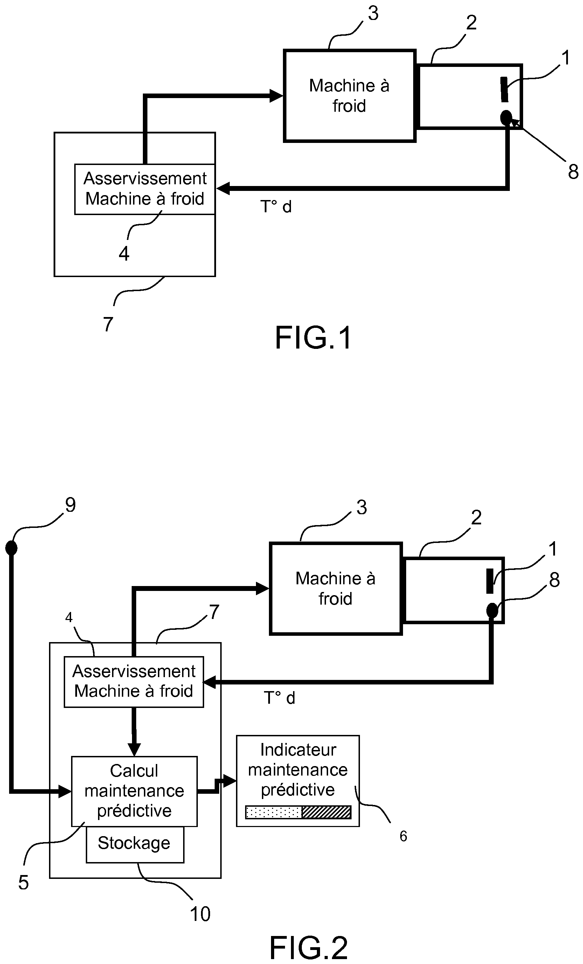

La figure 1 présente une conception classique de détecteur-refroidisseur qui comporte :

- un détecteur IR 1 placé dans une enceinte à vide (cryostat 2) qui maintient la température de cette enceinte à une température de fonctionnement du détecteur soit environ -200 °C,
- une machine à froid 3 qui utilise par exemple de l'hélium et fournit au cryostat le froid nécessaire pour amener (en général baisser) sa température d'une température ambiante à la température de fonctionnement. Le temps nécessaire pour atteindre la température de fonctionnement est désigné «Temps de Mise en Froid » (TMF). La performance de l'ensemble est mesurée sur une plage de température significative : de -173°C à -190°C. Le TMF pour passer de -173°C à -190 °C est typiquement de quelques dizaines de secondes.
- un dispositif d'asservissement 4 de cette machine à froid en fonction de la température du détecteur $T_D$ fournie par un capteur 8.

Les détecteurs-refroidisseurs utilisés aujourd'hui sont fragiles, hétérogènes en ce sens que deux détecteurs-refroidisseurs identiques ne se comportent pas de la même manière, et coûteux. La maintenance actuelle se limite à constater la panne lorsqu'elle survient c'est-à-dire en détectant une sortie de spécification du temps de mise à froid. La panne entraîne des indisponibilités et de l'insatisfaction de la part des utilisateurs. De plus les coûts de maintenance sont élevés. Les documents US 5 734 593 A, WO2007/017866, EP 0 747 644 et JP 62 030924 divulguent des détecteurs-refroidisseurs de l'art antérieur. En conséquence, il existe à ce jour un besoin pour un système permettant de pallier les inconvénients précités sans pour autant augmenter son encombrement.

Le principe qui sous-tend l'invention consiste à anticiper les dysfonctionnements c'est-à-dire à réaliser une maintenance prédictive afin de limiter les pannes. Cette maintenance prédictive est basée sur un suivi de l'état de santé du refroidisseur-détecteur. Plus précisément elle est effectuée à partir de la mesure de la dérive du temps de mise à froid. En effet cette dérive du TMF peut trahir :

- une fuite de l'hélium de la machine à froid,
- une pollution de l'hélium,
- une dégradation du vide du cryostat,
- avec pour conséquence une fatigue de la machine à froid sous forme de :
- dégradation des éléments mécaniques de la machine à froid,
- dégradation de l'isolation thermique,
- variation de la température interne du système optronique lors du démarrage de la mise en froid,
- variation de la température initiale du détecteur lors du démarrage de la mise en froid.

Le temps de mise en froid augmente lorsque la machine à froid fatigue. A chaque démarrage de la machine à froid on mesure ce TMF. L'invention est basée sur un traitement statistique de ces données. Ceci permet de détecter une évolution significative de ce TMF pour ainsi estimer le potentiel de vie du détecteur-refroidisseur.

Un des inconvénients de ce traitement statistique réside dans le stockage des données car les systèmes optroniques ont peu de mémoire disponible pour la maintenance. L'utilisation du modèle statistique de Koenig-Huyghens permet de s'affranchir des problèmes de stockage. L'algorithme permet à chaque détecteur-refroidisseur de construire seul son propre modèle de comportement. Le système est « auto-adaptatif ».

Plus précisément l'invention a pour objet le procédé de maintenance de la revendication 1 ainsi que la caméra thermique de la revendication 6. Cette solution permet donc avec un minimum d'espace mémoire de déterminer toute dérive brutale de son comportement. Il en résulte notamment une économie de l'espace mémoire nécessaire aux autres applications du système optronique, une meilleure maîtrise du détecteur-refroidisseur par l'utilisateur, une amélioration des performances opérationnelles, une augmentation de l'autonomie par une diminution de l'énergie consommée par le détecteur refroidisseur.

On se donne alors l'opportunité de :

- déclencher une opération de maintenance préventive car les défauts décelés sont réversibles,
- donner le choix à l'utilisateur de partir en mission avec un détecteur-refroidisseur en bon état plutôt qu'un autre au potentiel trop entamé.

Il comprend avantageusement un indicateur de maintenance prédictive relié aux moyens de calcul.

Selon une caractéristique de l'invention, la dérive brutale est définie en fonction d'un TMF moyen.

Selon une autre caractéristique de l'invention, le calcul est réalisé à partir d'une somme des TMF, d'un nombre de mises en froid cumulé, et d'un cumul des carrés des TMF.

De préférence, le calcul est réalisé pour différentes classes de température $T_D$ du détecteur.

La somme de TMF, le nombre de mises en froid cumulé, et le cumul des carrés des TMF sont typiquement réalisés pour une classe de température.

Chaque classe de température fait avantageusement l'objet de calculs indépendants.

Ce système est par exemple une caméra thermique.

D'autres caractéristiques et avantages de l'invention apparaîtront à la lecture de la description détaillée qui suit, faite à titre d'exemple non limitatif et en référence aux dessins annexés dans lesquels :

la figure 1 déjà décrite représente schématiquement un système optronique selon l'état de la technique,
la figure 2 représente schématiquement un système optronique selon l'invention,
la figure 3 est un organigramme présentant la méthode de détection d'une dérive brutale et soudaine,
la figure 4 représente schématiquement une courbe de température du détecteur en fonction du temps.

D'une figure à l'autre, les mêmes éléments sont repérés par les mêmes références.

Le système selon l'invention représenté figure 2, comprend en plus du système de l'état de la technique, un capteur 9 de la température $T_s$ interne au système et des moyens de calcul 5 et de stockage de données 10, ainsi qu'un indicateur 6 de maintenance prédictive.

L'invention est basée sur un traitement statistique des mesures du TMF lors de chaque démarrage de la machine à froid 3. Cela permet de détecter une évolution significative de ce TMF c'est-à-dire de vérifier que ce TMF ne dérive pas de manière inacceptable. Cela revient à détecter une dérive brutale et soudaine du TMF.

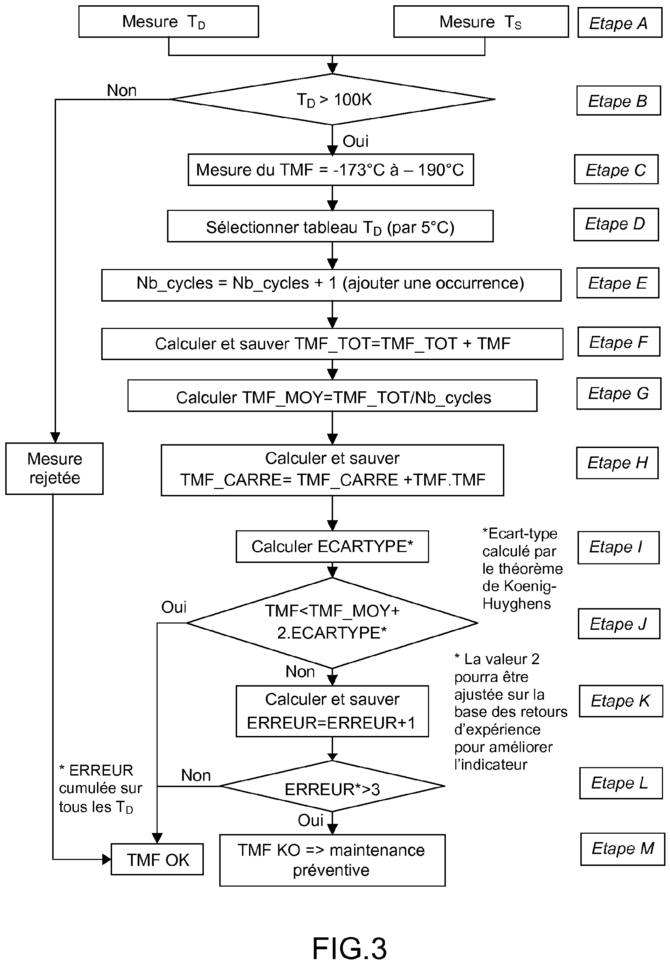

Ce calcul est décrit en relation avec l'organigramme de la figure 3.

Ce calcul est basé sur la mesure de la température $T_D$ du détecteur et de la température interne $T_s$ du système optronique (étape A). Ces mesures sont ensuite validées (étape B) c'est-à-dire ne sont prises en compte que dans certaines conditions. En effet, les éléments suivants perturbent la mesure du TMF ; il faut donc s'affranchir de ces perturbations.

    a. Une variation de la température interne caméra lors du démarrage de la mise en froid.
    Le calcul est réalisé pour différentes classes de température $T_D$ ou $T_s$, par exemple par pas de 5°C. Chaque classe de température fait l'objet d'un calcul de moyenne / écart-type indépendant. Il n'est donc pas utile de ramener les mesures à une température de référence. De plus, on considère que pour un système optronique donné, les conditions d'emploi sont assez reproductibles et donc centrées sur 2 ou 3 classes de températures.
    b. Une variation de la température initiale du détecteur lors du démarrage de la mise en froid.

Si la mise en froid est réalisée peu de temps après un arrêt, le TMF peut être très court (le cryostat reste froid quelques heures après l'arrêt de la MAF). Ce TMF n'est alors pas représentatif car la mise en froid ne réalise pas un cycle complet de mise en froid. Ces cas sont éliminés par comparaison de la température $T_D$ initiale avec la température interne $T_s$ du système. Si $T_D$ s'écarte trop de $T_s$, la mesure n'est pas prise en compte.

Une fois les mesures validées, un calcul pour chaque classe de températures, de l'écart type et de la moyenne des TMF mesurés permet de vérifier que la mesure TMF courante reste acceptable. Chaque classe de températures fait l'objet de calculs indépendants. Il n'est donc pas utile de ramener les mesures à une température de référence.

L'écart type est de préférence calculé selon le théorème de Koenig-Huyghens. Ce théorème permet de calculer l'écart type d'un échantillon de données sans sauvegarder l'ensemble des mesures. A chaque mesure, les données sont réévaluées puis sauvegardées. La mesure des TMF, $T_D$ et $T_s$ est quant à elle perdue.

Pour chaque classe de température on utilise les données suivantes :

- TMF_TOT qui est la somme de tous les TMF dans la classe de température considérée,
- Nb-cycles qui est le nombre de mises en froid cumulé dans la classe de température considérée,
- TMF_CARRE qui est le cumul des carrés des TMF dans la classe de température considérée ; ce TMF_CARRE sert au calcul de l'écart-type,
- ERREUR qui est le compteur des mesures qui dépassent le TMF moyen de k écart-type. La quantité k d'écart-type reste un paramètre pouvant être ajusté en fonction des retours d'expérience afin d'améliorer la pertinence de ce compteur.

Ces données sont des données cumulatives dont la valeur évolue en fonction de la mesure courante. Il n'y a pas de sauvegarde de chaque mesure. Ceci permet de limiter l'espace mémoire dédié à ce test de dérive brutale du TMF.

Les 3 premières données sont sauvegardées dans un tableau de K colonnes, K étant le nombre de classes de températures différentes, les lignes du tableau correspondant à ces données. Le nombre K est par exemple déterminé par le nombre de tranches de 5°C. Le compteur ERREUR est incrémenté quelle que soit la température à laquelle survient l'ERREUR. Il n'y a donc qu'une variable ERREUR.

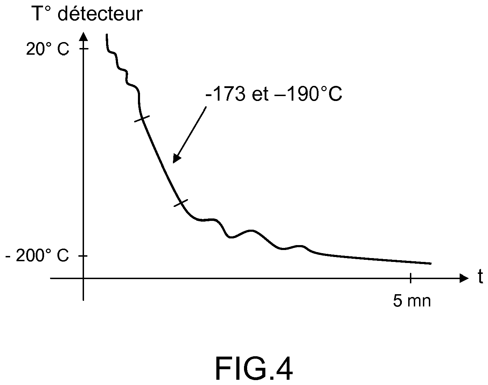

On se reporte à l'organigramme de la figure 3. Le TMF est mesuré dans une fourchette de température prédéfinie (étape C). Celle-ci est définie à partir de la courbe de la température du détecteur en fonction du temps, schématiquement représentée figure 4 : cette fourchette correspond à la portion quasi-linéaire de la courbe typiquement comprise entre -173 et -190 °C.

La colonne du tableau de sauvegarde des données est sélectionnée en fonction de la température $T_D$ du détecteur (étape D).

Diverses données sont alors calculées et sauvegardées dans ladite colonne du tableau en vue du calcul de l'évolution du temps de mise en froid : Nb-cycles (étape E), TMF_TOT (étape F), et TMF_CARRE (étape H). On calcule également le TMF moyen, TMF_MOY qui est égal à TMF_TOT/Nb_cycles (étape G) ; cette donnée n'est pas sauvegardée dans le tableau.

On calcule alors l'écart-type (étape I) de préférence par le théorème de Koenig-Huyghens car il permet de calculer l'écart-type d'un échantillon de données sans sauvegarder l'ensemble des mesures TMF, $T_D$ et $T_s$. Il est calculé selon la formule suivante :

$$ECARTYPE = \sqrt{\frac{TMF\_CARRE}{Nb} - TMF\_MOY^2} \quad \text{(Formule de Koenig-Huygens)}$$

Le TMF mesuré est alors comparé à une valeur seuil (étape J) représentative d'une panne imminente ; cette valeur est égale à

$$TMF\_MOY + k. \text{ écart-type.}$$

Le nombre k d'écart-type est paramétrable. On a par exemple k=2.

Si TMF < TMF-MOY + k.écart-type, alors ce TMF est correct, sinon il y a un défaut et le compteur ERREUR est incrémenté (étape K) et comparé à un nombre prédéterminé P (étape L). Il est incrémenté quelle que soit la température $T_D$ à laquelle survient ce TMF : il est ainsi cumulé sur toutes les températures du détecteur. Il n'y a donc qu'un compteur ERREUR pour toutes les classes de températures. Le nombre P est paramétrable. On a par exemple P=3.

Si le compteur ERREUR ne dépasse pas ce nombre P, alors, bien qu'une anomalie soit a priori détectée selon l'étape K, elle n'est pas considérée comme significative d'une dérive à prendre en compte. Si le compteur dépasse ce nombre P, cela signifie qu'une dérive brutale et soudaine se produit ; une interface utilisateur du système optronique recommande alors un retour pour opération de maintenance préventive (étape M). Cette interface utilisateur 6 peut être une interface sonore et/ou visuelle.

Les valeurs k et P peuvent être ajustées en fonction des retours d'expérience afin d'améliorer la pertinence du compteur ERREUR.

Cette méthode permet de s'affranchir des problèmes de disparité liés à la production. Chaque système optronique dispose d'une analyse qui lui est propre. Il n'y a pas de modèle générique. De plus, la méthode est tolérante en début de vie puis l'écart-type se resserre. Ceci laisse le temps au système optronique de « construire » son modèle. Le compteur ERREUR ne devient intéressant qu'après un certain nombre de démarrages. Ce nombre de démarrages est variable ; il est par exemple de l'ordre de 30.

Cette solution permet donc avec un minimum d'espace mémoire de déterminer toute dérive brutale de son comportement. Il en résulte notamment :

- une économie de l'espace mémoire (l'espace mémoire nécessaire est de 2 Ko) qui est ainsi disponible pour d'autres applications du système optronique,
- une meilleure maîtrise du détecteur-refroidisseur par l'utilisateur,
- une amélioration des performances opérationnelles,
- une augmentation de l'autonomie par une diminution de l'énergie consommée par le détecteur refroidisseur.

**Revendications**

1. Procédé de maintenance d'une caméra thermique équipé :

- d'un détecteur-refroidisseur qui comprend :

    i. une machine à froid (3),
    ii. un cryostat (2),
    iii. un détecteur IR (1) placé dans le cryostat,
    iv. un premier capteur (8) de la température $T_D$ du détecteur IR,

- d'une carte de traitement (7) qui comporte des moyens d'asservissement (4) de la machine à froid en fonction de la température $T_D$,

**caractérisé en ce qu'**il comprend un nombre « nb-cycles » de cycles de mise en froid de la machine à froid (3) désignés cycles « Marche-Arrêt » avec pour chaque cycle, les étapes suivantes :

- de calcul de la température $T_S$ interne à la caméra au moyen d'un deuxième capteur (9) de la température $T_S$ interne à la caméra,
- et de calcul par la carte de traitement du temps de mise à froid TMF à partir des températures $T_D$ et $T_S$, et à l'issue de ces « nb-cycles » cycles « Marche-Arrêt » :
- une étape de calcul par la carte de traitement :

    ◦ de l'évolution de la dérive du temps de mise à froid TMF, en fonction de « nb-cycles »,
    ◦ d'une dérive brutale en fonction de ladite évolution de la dérive du TMF,

- une étape de stockage de données utilisées dans lesdits calculs, ces données étant des données cumulées et non pas les mesures de températures $T_D$ et $T_S$ ni lesdits TMF.

2. Procédé de maintenance selon la revendication précédente, **caractérisé en ce que** la dérive brutale est définie en fonction d'un TMF moyen.

3. Procédé de maintenance selon la revendication précédente, **caractérisé en ce qu'**à chaque cycle « Marche-Arrêt » du détecteur-refroidisseur, il comprend une étape de calcul du produit du TMF par le n° du cycle, et à l'issue des « nb-cycles » cycles, une étape de stockage des données cumulées suivantes :

    - « nb-cycles »,
    - la somme des TMF sur le nombre « nb-cycles » de cycles considéré,
    - la somme des carrés des TMF sur le nombre « nb-cycles » de cycles considéré.

4. Procédé de maintenance selon l'une des revendications précédentes, **caractérisé en ce que** les étapes sont réitérées pour différentes classes de température $T_D$ du détecteur ou Ts du système.

5. Procédé de maintenance selon la revendication précédente, **caractérisé en ce que** chaque classe de température fait l'objet de calculs indépendants.

6. Caméra thermique équipée :

    - d'un détecteur-refroidisseur qui comprend :

        i. une machine à froid (3),
        ii. un cryostat (2),
        iii. un détecteur IR (1) placé dans le cryostat,
        iv. un premier capteur (8) de la température $T_D$ du détecteur IR,

    - d'un deuxième capteur (9) de la température $T_S$ interne à la caméra,
    - d'une carte de traitement (7) qui comporte des moyens d'asservissement (4) de la machine à froid en fonction de la température $T_D$, et des moyens de mise en oeuvre du procédé de maintenance de ladite caméra selon l'une des revendications précédentes.

**Patentansprüche**

1. Verfahren zum Warten einer Wärmekamera, die ausgestattet ist mit:

   - einem Detektor-Kühler, der Folgendes umfasst:

     i. eine Kältemaschine (3)
     ii. ein Kryostat (2),
     iii. einen in dem Kryostat platzierten IR-Detektor (1),
     iv. einen ersten Sensor (8) für die Temperatur $T_D$ des IR-Detektors,

   - einer Verarbeitungskarte (7), die Mittel (4) zum Regeln der Kältemaschine in Abhängigkeit von der Temperatur $T_D$ umfasst,

   **dadurch gekennzeichnet, dass** es eine Anzahl "nb-cycles" von Kühlzyklen der Kältemaschine (3) beinhaltet, "Start-Stopp"-Zyklen genannt, für jeden Zyklus mit den folgenden Schritten:

   - Berechnen der Temperatur $T_S$ innerhalb der Kamera mit Hilfe eines zweiten Sensors (9) der Temperatur $T_S$ innerhalb der Kamera, und
   - Berechnen, durch die Verarbeitungskarte, der Kühlzeit TMF auf der Basis der Temperaturen $T_D$ und Ts,

   und am Ende dieser "nb-cycles" "Start-Stopp"-Zyklen:

   - einen Schritt des Berechnens, mit der Verarbeitungskarte:

     ◦ der Entwicklung der Drift der Kühlzeit TMF in Abhängigkeit von "nb-cycles",
     ◦ einer plötzlichen Drift in Abhängigkeit von der Entwicklung der Drift der TMF,

   - einen Schritt des Speicherns der bei den Berechnungen benutzten Daten, wobei diese Daten kumulierte Daten und nicht die Messwerte der Temperaturen $T_D$ und $T_S$ oder der TMF sind.

2. Wartungsverfahren nach dem vorherigen Anspruch, **dadurch gekennzeichnet, dass** die plötzliche Drift in Abhängigkeit von einer mittleren TMF definiert ist.

3. Wartungsverfahren nach dem vorherigen Anspruch, **dadurch gekennzeichnet, dass** es in jedem "Start-Stopp"-Zyklus des Kühlerdetektors einen Schritt des Berechnens des Produkts aus der TMF und der Nummer des Zyklus und, nach "nb-cycles" Zyklen, einen Schritt des Speicherns der folgenden kumulativen Daten beinhaltet:

   - "nb-cycles",
   - die Summe der TMF über die betrachtete Anzahl "nb-cycles" von Zyklen,
   - die Summe der Quadrate der TMF über die betrachtete Anzahl "nb-cycles" von Zyklen.

4. Wartungsverfahren nach einem der vorherigen Ansprüche, **dadurch gekennzeichnet, dass** die Schritte für unterschiedliche Klassen von Temperatur $T_D$ des Detektors oder $T_S$ des Systems wiederholt werden.

5. Wartungsverfahren nach dem vorherigen Anspruch, **dadurch gekennzeichnet, dass** jede Temperaturklasse das Objekt unabhängiger Berechnungen ist.

6. Wärmekamera, die ausgestattet ist mit:

   - einem Detektor-Kühler, der Folgendes umfasst:

     i) eine Kältemaschine (3)
     ii) ein Kryostat (2),
     iii) einen in dem Kryostat platzierten IR-Detektor (1),
     iv) einen ersten Sensor (8) für die Temperatur $T_D$ des IR-Detektors,

   - einem zweiten Sensor (9) für die Temperatur $T_S$ innerhalb der Kamera

- einer Verarbeitungskarte (7), die Mittel (4) zum Regeln der Kältemaschine in Abhängigkeit von der Temperatur $T_D$ und Mittel zum Ausführen des Verfahrens zum Warten der Kamera nach einem der vorherigen Ansprüche umfasst.

**Claims**

1. A maintenance method for a thermal camera equipped:

    - with a detector/cooler which comprises:

        i. a cooling machine (3),
        ii. a cryostat (2),
        iii. an IR detector (1) placed in the cryostat,
        iv. a first sensor (8) for measuring the temperature $T_D$ of the IR detector,

    - with a processing card (7) which includes means for servo-controlling (4) the cooling machine according to the temperature $T_D$,

    **characterised in that** it comprises a number "nb-cycles" of refrigerating cycles of the cooling machine (3) designated "on-off" cycles with, for each cycle, the following steps:

    - calculation of the internal temperature $T_S$ of the camera by means of a second sensor (9) measuring the internal temperature $T_S$ of the camera,
    - and calculation by the processing card of the refrigerating time TMF based on the temperatures $T_D$ and $T_S$,

    and on completion of these "nb-cycles", "on-off" cycles:

    - a step for calculation by the processing card:

        ∘ of the progression of the drift in the refrigerating time TMF, according to "nb-cycles",
        ∘ of a sudden drift as a function of said progression of the drift in the TMF,

    - a step of storing data used in said calculations, these data being cumulative data and not measurements of temperatures $T_D$ and $T_S$ nor said TMF.

2. The maintenance method according to the preceding claim, **characterised in that** the sudden drift is defined according to an average TMF.

3. The maintenance method according to the preceding claim, **characterised in that** in each "on-off" cycle of the detector/cooler, it includes a step of calculating the product of the TMF by the cycle number and, on completion of the "nb-cycles" cycles, a step of storing the following cumulative data:

    - "nb-cycles",
    - the sum of the TMFs over the number "nb-cycles" of cycles concerned,
    - the sum of the squares of the TFMs over the number "nb-cycles" of cycles concerned.

4. The maintenance method according to any of the preceding claims, **characterised in that** the steps are reiterated for different classes of temperature $T_D$ of the detector or $T_S$ of the system.

5. The maintenance method according to the preceding claim, **characterised in that** each temperature class is the subject of independent calculations.

6. A thermal camera equipped:

    - with a detector/cooler which comprises:

        i. a cooling machine (3),

ii. a cryostat (2),
iii. an IR detector (1) placed in the cryostat,
iv. a first sensor (8) for measuring the temperature $T_D$ of the IR detector,

- with a second sensor (9) for measuring the internal temperature $T_S$ of the camera,
- with a processing card (7) which includes means for servo-controlling (4) the cooling machine according to the temperature $T_D$, and means for implementing the maintenance method for said camera according to any of the preceding claims.

FIG.1

FIG.2

FIG.3

T° détecteur

20° C

-173 et −190°C

- 200° C

5 mn

t

## FIG.4

**RÉFÉRENCES CITÉES DANS LA DESCRIPTION**

**Documents brevets cités dans la description**

- US 5734593 A
- WO 2007017866 A
- EP 0747644 A
- JP 62030924 A